# FASCICULE DE BREVET EUROPEEN

(11) **EP 0 914 753 B1**
(45) Date de publication et mention de la délivrance du brevet: **02.05.2002**
(21) Numéro de dépôt: 97934600.4
(22) Date de dépôt: 21.07.1997
(51) Int. Cl.: H05B 6/80, B01J 19/12

(54) **DISPOSITIF POUR REALISER DES REACTIONS CHIMIQUES SOUS MICRO-ONDES SUR UNE GRANDE QUANTITE DE PRODUITS**
VORRICHTUNG ZUR AUSFÜHRUNG EINER CHEMISCHEN REAKTION AN EINER GROSSEN PRODUKTMENGE MITTELS MIKROWELLEN
DEVICE USING MICROWAVES TO CARRY OUT LARGE-SCALE CHEMICAL REACTIONS

(30) Priorité: 23.07.1996 FR 9609207
(43) Date de publication de la demande: 12.05.1999
(73) Titulaire: CEM Corporation, Matthews North Carolina 28106 (US)
(72) Inventeur: JACQUAULT, Patrick, F-92910 Sèvres (FR); KOUTCHENKOFF, Eric, F-18700 Oizon (FR); DI MARTINO, Jean-Louis, F-45250 Briare (FR)
(74) Mandataire: Ahner, Francis
(86) Numéro de dépôt international: FR9701348
(87) Numéro de publication internationale: WO9804102

(56) Documents cités:
- EP-A- 0 549 495
- WO-A-95/13133
- WO-A-95/15671
- DE-A- 4 319 498
- US-A- 4 286 134
- PATENT ABSTRACTS OF JAPAN vol. 014, no. 480 (C-0771), 19 octobre 1990 & JP 02 198626 A (TSUKISHIMA KIKAI CO LTD;OTHERS: 01), 7 août 1990,

## Description

La présente invention concerne un dispositif pour réaliser sous un chauffage par micro-ondes des réactions chimiques ou physico-chimiques sur une grande quantité nominale de produit.

Plus particulièrement, elle concerne un dispositif comprenant un générateur de micro-ondes et une cavité d'application des micro-ondes destinée à contenir un réacteur de grande capacité de rétention réalisé en matériau transparent aux micro-ondes, apte à contenir la quantité de produit à traiter.

On entend ici par grande quantité nominale de produit, une quantité d'environ un litre traitée à chaque cycle de chauffage.

L'invention trouve une application particulièrement avantageuse pour la mise en oeuvre de réactions de synthèse organique en continu ou non. L'invention peut aussi avantageusement être utilisée pour mettre en oeuvre d'autres réactions chimiques ou physico-chimiques en milieu homogéne ou hétérogène telles que par exemple des réactions de digestion d'extraction, de polymérisation, de distillation ou encore de séchage.

Depuis plusieurs années, l'énergie micro-ondes a été introduite dans des appareils de Laboratoire pour réaliser des réactions de chimie analytique et de synthèse organique. A cet effet, on connaît du document EP - 0 155 893 appartenant à la Demanderesse, un appareil pour conduire des réactions chimiques par voie humide qui comprend un générateur de micro-ondes, une cavité d'application des micro-ondes destinée à contenir un récipient du type tube à essais contenant un échantillon de produit à traiter et au moins un réactif spécifique de ce produit, ledit récipient étant réalisé en matériau transparent, transmettant les micro-ondes.

Un tel appareil permet seulement de réaliser des réactions chimiques à très faible volume puisque le récipient du type tube à essais contient que quelques millilitres d'échantillon.

La modification de cet appareil pour le traitement d'une grande quantité nominale de produit et/ou de réactif n'est pas évidente a priori puisqu'elle impose une modification en forme et en dimension de la cavité d'application des micro-ondes de facon à ce qu'elle puisse accueillir un réacteur de grande capacité destiné à contenir la grande quantité de produit, tout en tenant compte de certaines contraintes techniques essentielles comme la répartition homogène du champ micro-ondes à l'intérieur de la cavité d'application, l'homogénéité de la température de chauffage du produit contenu dans le réacteur, l'agitation du produit contenu dans le réacteur, ainsi que la contrainte de sécurité d'utilisation de l'appareil incluant l'étanchéité de la cavité d'application vis-à-vis de la propagation des micro-ondes vers l'extérieur tout en respectant un encombrement réduit de l'appareil.

En outre, l'appareil décrit dans le document EP - 0 155 893 ne permet pas un fonctionnement en continu.

Par ailleurs, on connaît du document FR- 2 697 448 un dispositif de conduite d'opérations chimiques constitué par un four micro-ondes fermé par une porte frontale, à l'intérieur duquel est délimitée une enceinte de travail dans laquelle est positionné un réacteur de grande capacité de rétention. Ce réacteur comporte au moins un col qui traverse la paroi supérieure du four pour être relié à l'extérieur. Ce four micro-ondes est pourvu d'un magnétron apte à émettre un champ multimodes à l'intérieur de l'enceinte de travail.

L'inconvénient principal de ce dispositif est que l'on ne peut pas maîtriser la répartition du champ micro-ondes multimodes à l'intérieur de l'enceinte de travail. De ce fait, le produit contenu dans le réacteur peut présenter un gradient de température indésirable et on ne peut obtenir une bonne reproductibilité des réactions chimiques conduites à l'intérieur de ladite enceinte de travail.

En outre, un tel dispositif ne peut pas fonctionner en continu. Il fonctionne simplement de façon intermittente.

La présente invention propose un nouveau dispositif pour réaliser des réactions chimiques ou physico-chimiques sur une grande quantité nominale de produit de l'ordre de 1 litre et de préference de l'ordre de 800 millilitres, comportant un générateur de micro-ondes et une cavité d'application des micro-ondes destinée à contenir un réacteur de grande capacité de rétention, réalisé en matériau transparent aux micro-ondes, apte à contenir la quantité de produit à traiter. Le dispositif permet de réaliser de façon reproductible lesdites réactions chimiques ou physico-chimiques à pression atmosphérique ou bien sous pression ou dépression, en fonctionnant en intermittence ou en continu.

Plus particulièrement dans le dispositif conforme à la présente invention, la cavité d'application est délimitée par une paroi latérale fermée de forme sensiblement cylindrique de révolution autour d'un axe X ainsi que par une paroi de fond pourvue d'une entrée des micro-ondes dans la cavité, et est ouverte supérieurement pour la mise en place et l'extraction du réacteur, le générateur des micro-ondes est apte à émettre un champ micro-ondes monomode qui se propage via ladite entrée selon l'axe X dans la cavité d'application, cette dernière étant dimensionnée en fonction de la longueur d'onde du mode résonnant du champ micro-ondes dans la cavité d'application selon l'axe X de sorte que la valeur de ce champ micro-ondes est prédéterminée dans tous les plans transversaux à l'axe X dans la cavité d'application, et il est prévu un couvercle destiné à fermer l'ouverture supérieure de la cavité d'application, de manière étanche vis-à-vis de la propagation des micro-ondes vers l'extérieur, et comportant au moins un conduit qui permet de raccorder l'intérieur de la cavité d'application à l'extérieur de sorte que l'intérieur de la cavité d'application est soumis à la pression atmosphérique.

Ainsi, selon l'invention, l'association de la cavité d'application présentant une forme particulière telle que définie ci-dessus, avec un générateur de champ micro-ondes monomode permet de maîtriser la répartition du champ micro-ondes émis à l'intérieur de la cavité d'application et de ce fait, la reproductibilité des réactions chimiques ou physico-chimiques conduites à l'intérieur de ladite cavité d'application.

Selon l'invention, le couvercle fermant la cavité d'application assure l'étanchéité du dispositif vis-à-vis de la propagation des micro-ondes vers l'extérieur, tout en permettant de réduire l'encombrement global du dispositif.

La cavité d'application du dispositif selon l'invention est soumis à la pression atmosphérique en étant reliée à l'extérieur par l'intermédiaire d'un conduit prévu dans le couvercle.

Toutefois, il est possible avantageusement de réaliser des réactions chimiques sous pression ou sous dépression dans cette cavité d'application en introduisant dans ladite cavité d'application un réacteur fermé fonctionnant sous pression ou sous dépression.

Avantageusement, selon l'invention la cavité d'application présente entre l'entrée des micro-ondes et son ouverture supérieure une hauteur correspondante à trois demi-longueurs d'onde du mode résonnant du champ micro-ondes dans ladite cavité.

Selon un mode de réalisation particulièrement avantageux du dispositif conforme à la présente invention, en vue d'un fonctionnement en continu, le réacteur comporte dans son fond une ouverture débouchant dans une tubulure destinée à être introduite dans un orifice prévu dans la paroi de fond de la cavité d'application et débouchant à l'extérieur de ladite cavité d'application pour son raccordement avec une pompe d'amenée de produit et/ou de réactif, ledit orifice prévu dans la paroi de fond de la cavité d'application étant bordé extérieurement par une cheminée formant barrière à la propagation vers l'extérieur des micro-ondes, et un des conduits du couvercle prévu pour le raccordement de la cavité d'application avec l'extérieur permet de relier supérieurement, via une tubulure de sortie, l'intérieur du réacteur à une pompe de sortie du produit traité.

Ainsi, à l'aide du dispositif conforme à l'invention, on peut traiter en continu une grande quantité de produit en utilisant l'énergie micro-ondes ce qui apporte un réel gain de temps de réalisation des réactions chimiques conduites.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe d'un premier mode de réalisation du dispositif pour réaliser des réactions chimiques conforme à la présente invention,
- la figure 2 est une vue schématique en coupe selon un plan perpendiculaire au plan de coupe de la figure 1 du dispositif représenté sur la figure 1,
- la figure 3 est une vue schématique en coupe d'un deuxième mode de réalisation du dispositif conforme à la présente invention,
- la figure 4 est une vue schématique en coupe d'un troisième mode de réalisation du dispositif conforme à la présente invention,
- la figure 5 est une vue schématique en coupe d'un quatrième mode de réalisation du dispositif conforme à la présente invention,
- la figure 6 est une vue schématique en coupe d'un cinquième mode de réalisation du dispositif conforme à la présente invention,
- la figure 7 est une vue schématique en coupe d'un sixième mode de réalisation du dispositif conforme à la présente invention.

Préliminairement, on notera que d'une figure à l'autre, les éléments identiques ou similaires ont été dans la mesure du possible désignés par les mêmes signes de référence et ne seront pas redécrits à chaque fois.

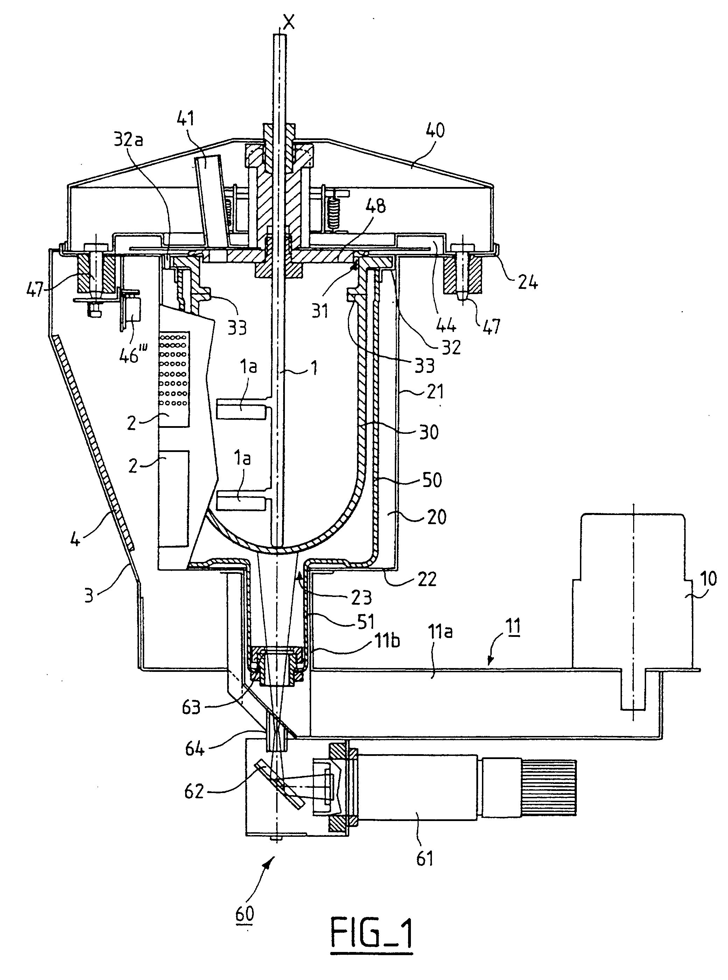

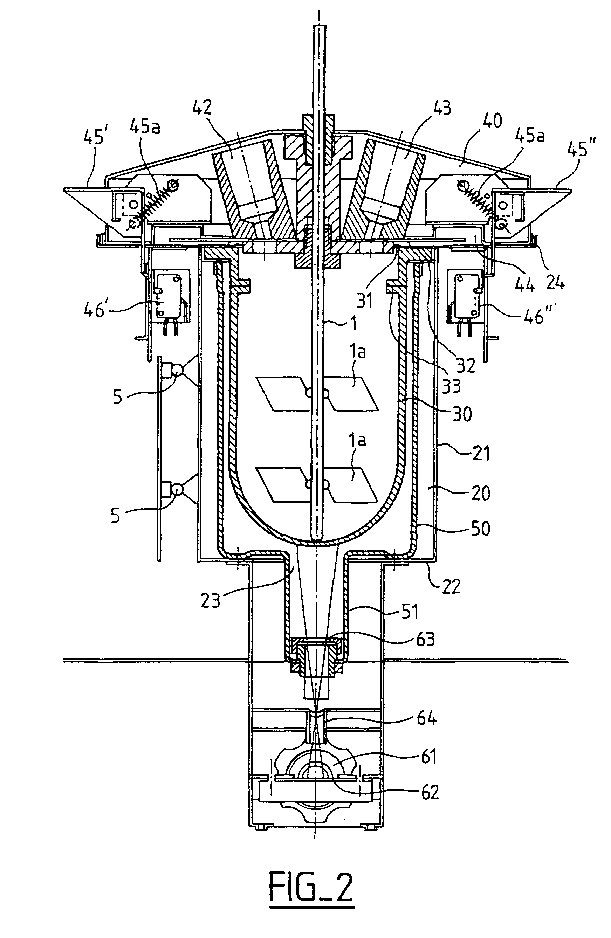

Sur les figures 1 et 2, on a représenté un premier mode de réalisation d'un dispositif pour réaliser des réactions chimiques ou physico-chimiques sur une grande quantité nominale de produit.

Selon le mode de réalisation représenté, le dispositif est agencé pour fonctionner de manière intermittente avec une quantité déterminée de produit à traiter.

Ce dispositif comprend un générateur de micro-ondes 10, une cavité d'application des micro-ondes 20 destinée à contenir un réacteur 30 de grande capacité de rétention, réalisé en matériau transparent aux micro-ondes, apte à contenir la quantité de produit à traiter.

La cavité d'application des micro-ondes 20 est délimitée par une paroi latérale 21 fermée de forme sensiblement cylindrique de révolution autour d'un axe X, ici vertical, constituant l'axe principal du dispositif, ainsi que par une paroi de fond 22 s'étendant transversalement à l'axe X et pourvue d'une entrée 23 des micro-ondes dans la cavité d'application 20. Cette cavité d'application 20 est ouverte en partie supérieure suivant une ouverture circulaire dont les dimensions sont telles qu'elle permet l'introduction du réacteur 30 dans ladite cavité d'application ainsi que son extraction hors de la cavité.

Le générateur des micro-ondes 10 est apte à émettre un champ micro-ondes monomode qui se propage à l'intérieur d'un guide d'ondes coudé 11 débouchant via l'entrée 23 à l'intérieur de la cavité.

Plus particulièrement, le guide d'ondes coudé 11 comporte une première partie horizontale 11a à l'extrémité de laquelle est positionné le magnétron 10 formant générateur de micro-ondes. Cette portion horizontale 11a se raccorde par un coude à une partie de raccordement verticale 11b s'étendant selon l'axe X de la cavité d'application 20 et débouchant à son extrémité dans la cavité d'application 20 via l'entrée 23. Au niveau du raccordement de la partie horizontale 11a et de la partie verticale 11b du guide d'ondes 11, la paroi externe du guide d'ondes suit un pan coupé.

Bien entendu, selon une variante non représentée on peut prévoir un guide d'onde droit placé directement selon l'axe de la cavité d'application.

A l'intérieur de la cavité d'application 20 est positionné un réacteur 30 comportant une paroi latérale de forme sensiblement cylindrique de révolution autour de l'axe X, qui se raccorde de manière continue à un fond fermé arrondi. Le réacteur 30 comporte une ouverture supérieure 31 dont la dimension correspond sensiblement à celle de l'ouverture supérieure de la cavité d'application. Le réacteur 30 présente une capacité de rétention de produit et/ou de réactif d'environ un litre et de préférence ici de 800 millilitres.

Le réacteur 30 est positionné à l'intérieur d'un doigt de gant 50 qui se positionne dans la cavité d'application entre la paroi latérale 21 de la cavité d'application 20 et la paroi latérale du réacteur 30, en présentant une forme similaire à celle de la cavité d'application 20 et également une ouverture supérieure pour la mise en place et l'extraction du réacteur. L'ouverture supérieure de la cavité d'application est bordée intérieurement par une collerette périphérique sur lequel repose un bord périphérique 32 entourant l'ouverture supérieure 31 du réacteur 30 de telle sorte que le réacteur 30 est suspendu à l'intérieur de la cavité d'application, et est entouré par le doigt de gant 50.

Il est prévu au niveau de la collerette périphérique intérieure de la cavité d'application un ergot anti-rotation 32a destiné à s'engager dans un évidement correspondant du bord périphérique 32 du réacteur pour éviter une éventuelle rotation du réacteur autour de l'axe X dans la cavité d'application.

En outre, le doigt de gant 50 comporte un fond positionné sur la paroi. de fond 22 de la cavité d'application 20, et dont la partie centrale 51 se prolonge à l'intérieur de la partie de raccordement verticale 11b du guide d'ondes 11.

Ce doigt de gant 50 protége la cavité d'application 20 ainsi que le guide d'ondes 11 lors d'un éventuel claquage du réacteur sous le chauffage par micro-ondes.

On remarquera que le réacteur 30 comporte des plots 33 situés juste en dessous de son ouverture supérieure 31 et qui s'étendent vers l'intérieur du réacteur 30 en saillie transversalement du plan de la paroi latérale dudit réacteur. Ces plots 33 permettent l'extraction du réacteur 30 hors de la cavité d'application 20.

La cavité d'application des micro-ondes 20 est réalisée en acier inox et est dimensionnée en fonction de la longueur d'onde du mode résonnant du champ micro-ondes selon l'axe X dans la cavité d'application, de sorte que la valeur de ce champ micro-ondes est prédéterminée à tous les niveaux suivant l'axe X dans la cavité d'application et plus particulièrement dans tous les plans transversaux à l'axe X.

Ceci est particulièrement avantageux pour assurer la bonne conduite et la reproductibilité des réactions chimiques ou physico-chimiques réalisées à l'intérieur de la cavité d'application. Ainsi, la température du produit à traiter contenu dans le réacteur est homogène.

Plus particulièrement, préférentiellement, les dimensions de la cavité d'application 20 ont été déterminées pour que la fréquence de résonnance du champ micro-ondes à l'intérieur de ladite cavité, à un mode fondamental TE, soit égale à 2,45 GHz. Ainsi, le diamètre de ladite cavité d'application est égal environ à 154 millimètres et sa hauteur est égale environ à 206 millimètres. La hauteur de ladite cavité d'application, comprise entre l'entrée des micro-ondes 23 et son ouverture circulaire est déterminée de sorte qu'elle corresponde à trois demi-longueurs d'onde du mode résonnant du champ micro-ondes dans ladite cavité.

On obtient alors expérimentalement un champ micro-ondes nul au niveau de l'entrée 23 de ladite cavité d'application avec un effet d'angle du coude du guide d'onde assez faible. Ceci est dû au fait que l'onde stationnaire à l'intérieur du guide d'onde 11 ne présente pas d'amplitude maximale au niveau de l'angle droit du coude mais juste après celui-ci. De plus, on obtient dans la hauteur active de la cavité d'application trois valeurs maximales du champ micro-ondes à un mode fondamental TE.

Afin d'éviter la propagation vers l'extérieur du champ micro-ondes émis à l'intérieur de la cavité d'application 20, il est prévu, comme le montre les figures 1 et 2, un couvercle 40 destiné à fermer l'ouverture supérieure de la cavité d'application 20, de manière étanche vis-à-vis de la propagation des micro-ondes vers l'extérieur.

Ce couvercle 40 vient se positionner sur une collerette 24 prévue extérieurement autour de l'ouverture supérieure de la cavité d'application. Le couvercle 40 est positionné à l'aide de plots de centrage 47 introduits dans des trous formés dans la collerette de support 24 de la cavité d'application 20.

Le couvercle 40 est pourvu sur sa face interne tournée vers l'intérieur de la cavité d'application d'un piège quart d'onde 44 évitant ainsi la propagation des micro-ondes émis dans la cavité d'application vers l'extérieur par le couvercle. En outre, il comporte sur cette face interne en dessous du piège quart d'onde dans une région centrale centrée autour de l'axe X un joint d'étanchéité 48 couvrant la surface de l'ouverture supérieure 31 du réacteur 30.

Le couvercle 40 présente trois conduits 41, 42, 43 raccordant l'intérieur de la cavité d'application 20, et selon le mode de réalisation représenté sur les figures 1 et 2 l'intérieur du réacteur 30, à l'extérieur du dispositif de telle sorte que selon le mode réalisation représenté sur les figures 1 et 2, la cavité d'application 20 et l'intérieur du réacteur 30 est soumis à la pression atmosphérique. Les deux conduits 42, 43 sont placés symétriquement de part et d'autre de l'axe X.

Le joint d'étanchéité 48 comporte trois ouvertures permettant de raccorder l'intérieur du réacteur 30 avec les conduits 41, 42, 43 du couvercle 40 débouchant vers l'extérieur.

Les conduits 41, 42, 43 prévus dans le couvercle et reliant l'intérieur de la cavité d'application 20 et ici l'intérieur du réacteur 30 à l'extérieur, permettent notamment le prélèvement d'échantillons de produit au cours de la réaction chimique, l'injection de produits et/ou de réactifs, l'extraction des vapeurs émises par la réaction chimique. On peut prévoir plus particulièrement que le conduit 41 permette le prélèvement d'échantillons et/ou la réalisation de mesures auxiliaires, et que le conduit 42 permette l'extraction des vapeurs. Ce conduit 42 est alors raccordé à un système d'aspiration externe non représenté, comprenant un réfrigérant permettant de recondenser les vapeurs émises lors de la réaction chimique. Un tel système peut permettre au dispositif de fonctionner à reflux ou en phase de mise à sec.

Le conduit 43 peut être lui plus particulièrement associé à un dispositif d'injection de produits et/ou de réactifs au cours de la réaction chimique.

En outre, le couvercle 40 est verrouillé sur la cavité d'application 20 par l'intermédiaire d'au moins deux poignées de verrouillage 45', 45" actionnées sur le couvercle 40 par l'intermédiaire de quatre ressorts de rappel 45a de sorte qu'elles peuvent prendre deux positions, une position ouverte et une position verrouillée représentée plus particulièrement sur la figure 2, dans laquelle les poignées de verrouillage 45', 45" sont verrouillées sur une partie de support externe liée à la cavité d'application 20.

En position verrouillée, les deux poignées de verrouillages 45', 45" établissent un contact avec deux contacteurs 46', 46" qui émettent alors un signal de sécurité. Les deux contacteurs 46', 46" sont connectés à un troisième contacteur de sécurité 46"' représenté plus particulièrement sur la figure 1 qui permet de vérifier que le contact des premier et second contacteurs 46', 46" a bien été établi.

En outre, comme on peut le voir sur les figures 1 et 2, il est prévu un agitateur comprenant un arbre d'entraînement en rotation 1 s'étendant selon l'axe X et portant à son extrémité inférieure des pales d'agitation la destinées à être plongées dans le produit contenu dans le réacteur. L'arbre d'entraînement en rotation 1 émerge à l'extérieur de la cavité d'application en traversant de manière étanche le couvercle 40. Cet agitateur permet d'homogénéiser le produit à traiter au cours de la réaction chimique.

La cavité d'application 20 comporte avantageusement sur le côté extérieur de sa paroi latérale 21 des grilles 2 pour visualiser l'intérieur de la cavité d'application. A cet effet, on remarquera que dans le carter 3 du dispositif à l'intérieur duquel est positionnée la cavité d'application 20, il est prévu une fenêtre transparente 4 positionnée en face des grilles de visualisation 2. En outre, de façon avantageuse, il est prévu comme le montre plus particulièrement la figure 2, des lampes d'éclairage 5 facilitant la visualisation de l'intérieur de la cavité d'application par l'intermédiaire de la fenêtre transparente du carter et des grilles de visualisation prévues sur la face externe de la cavité d'application.

Le dispositif représenté sur les figures 1 et 2 comporte un dispositif de mesure de la température 60 du produit à traiter durant la réaction chimique ou physico-chimiques réalisée, disposé en dessous de la cavité d'application selon l'axe X. Ce dispositif de mesure de la température 60 comporte un capteur infrarouge 61 apte à capter directement ou indirectement un rayonnement infrarouge émis selon l'axe X par le produit chauffé dans le réacteur. Selon la variante représentée sur les figures, ce capteur infrarouge 61 est positionné en dessous de la cavité d'application et plus particulièrement en dessous du guide d'ondes 11, de manière décalée par rapport à l'axe X de la cavité d'application. Il est positionné face à un miroir de visée 62 réalisé en acier inox, placé sur l'axe X et orienté à 45 degré par rapport audit axe X.

Il est prévu dans le pan coupé du guide d'ondes, une ouverture ou trou de visée bordé par une cheminée 64 formant barrière à la propagation vers l'extérieur des micro-ondes. Ce trou de visée est placé sur l'axe X face au miroir de visée 62. En outre, il est prévu une fenêtre de visée 63 positionnée dans la partie centrale du fond du doigt de gant 51 rentrant dans la partie de raccordement verticale 11a du guide d'ondes. Cette fenêtre de visée 63 s'étend transversalement à l'axe X face au trou de visée prévu dans la paroi en pan coupé du guide d'ondes.

Ainsi, le rayonnement infrarouge émis par le produit chauffé sous micro-ondes traverse alors la fenêtre de visée 63 et le trou de visée pratiqué dans la paroi en pan coupé du guide d'ondes, pour atteindre le miroir de visée 62 qui réfléchit le rayonnement émis vers le capteur infrarouge 61. Le capteur infrarouge 61 peut être connecté à un système d'asservissement de la réaction chimique en fonction de la température mesurée du produit contenu dans le réacteur.

Bien entendu, on peut prévoir que le capteur infrarouge soit placé suivant l'axe X et recoive alors directement le rayonnement émis par le produit chauffé.

En outre, selon une autre variante non représentée, on peut prévoir que le dispositif de mesure de la température du produit contenu dans le réacteur, soit disposé sur un côté latéral de la cavité d'application. Ledit dispositif de mesure comprend alors un capteur infrarouge apte à capter via un orifice prévu dans la paroi latérale de ladite cavité d'application, un rayonnement infrarouge émis selon un axe transversal à l'axe X par le produit chauffé dans le réacteur.

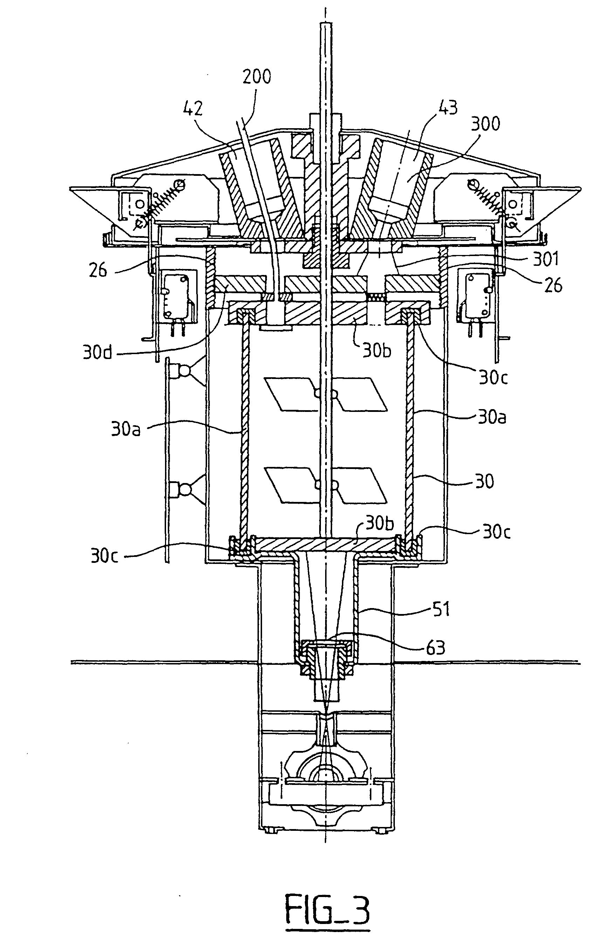

Sur la figure 3, on a représenté un deuxième mode de réalisation du dispositif conforme à la présente invention. Le dispositif est ici agencé de manière à fonctionner sous pression ou sous dépression. Il comporte alors un réacteur fermé positionné à l'intérieur de la cavité d'application ouverte vers l'extérieur via le conduit 41 prévu dans le couvercle 40. Ce réacteur fermé 30 est réalisé par l'assemblage de parois latérales en verre 30a avec une paroi de fond 30b et une paroi supérieure 30b. La paroi de fond et la paroi supérieure 30b du réacteur 30 sont assemblées sur les bords inférieur et supérieur des parois latérales 30a par l'intermédiaire de joints d'étanchéité 30c. A l'intérieur du réacteur 30, il est ainsi défini un espace intérieur fermé et étanche vis-à-vis de l'extérieur. La paroi supérieure 30b du réacteur 30 est liée et maintenue sous pression par l'intermédiaire d'une plaque de maintien 30d qui s'étend transversalement sur toute la largeur de la cavité d'application 20 et qui comporte un bord vissé dans un filetage 26 prévu sur la face interne de la paroi latérale 21 de la cavité d'application 20 juste en dessous de son ouverture supérieure.

Ainsi, le réacteur fermé 30 peut fonctionner sous pression ou sous dépression par rapport à la pression atmosphérique régnant à l'intérieur de la cavité d'application 20. A cet effet, il est prévu selon le mode de réalisation représenté sur la figure 3, un capteur de pression 200 introduit dans le coeur du réacteur 30 via le conduit 42 du couvercle 40, puis via un orifice prévu dans la plaque de maintien 30d et enfin via un orifice prévu dans la plaque supérieure 30b du réacteur. Ce capteur de pression permet de mesurer la pression ou la dépression régnant à l'intérieur du réacteur 30. En outre, en cas de rupture du réacteur, il est prévu un dispositif d'aspiration 300 avec une buse d'aspiration 301 positionnée dans la cavité d'application 20, à la sortie du conduit 43 prévu dans le couvercle 40. Cette buse d'aspiration débouche via un orifice prévu dans la plaque de maintien 30d sur la paroi supérieure 30b du réacteur 30 par I'intérmédiaire d'une pastille de sécurité.

Le dispositif d'aspiration 300 est connecté à la buse d'aspiration 301 par l'intermédiaire du conduit 43. En cas de rupture du réacteur, la pastille de sécurité se rompt et la buse d'aspiration associée au dispositif d'aspiration se met en marche pour aspirer les débris du réacteur.

Selon le mode de réalisation représenté sur la figure 3, la partie 50 du doigt de gant située à l'intérieur de la cavité d'application 20 n'existe plus, seule la partie 51 du doigt de gant plongeant à l'intérieur du guide d'ondes 11 est conservée avec la fenêtre de visée 63 pour la mesure de la température comme cela a été décrit précédemment.

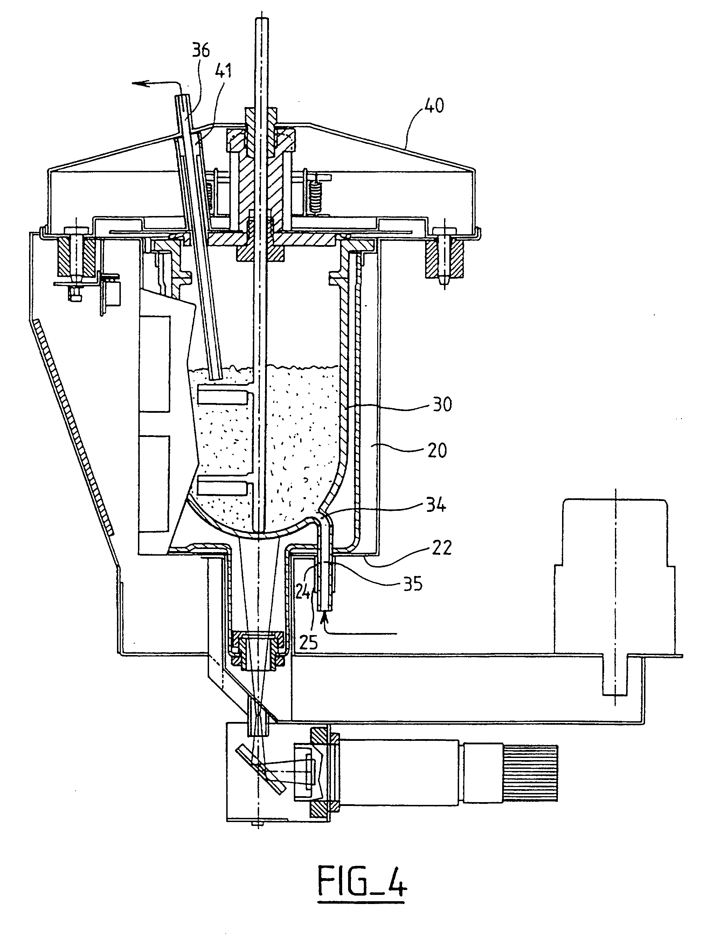

Sur la figure 4, on a représenté un troisième mode de réalisation du dispositif conforme à l'invention, en vue d'un fonctionnement en continu du dispositif. L'agencement du dispositif représenté sur la figure 4 permet la conduite de réactions chimiques telles que de la synthèse organique, en continu.

Selon ce mode de réalisation, le réacteur 30 de forme similaire à celle du réacteur représenté sur les figures 1 et 2, comporte dans son fond une ouverture 34 raccordée à une tubulure 35 destinée à traverser le doigt de gant 50 et un orifice 24 prévu dans la paroi de fond 22 de la cavité d'application 20 pour déboucher à l'extérieur de la cavité d'application et être raccordée à une pompe (non représentée) d'amenée de produits et/ou des réactifs. L'orifice 24 prévu dans la paroi de fond 22 de la cavité d'application 20 est bordé extérieurement par une cheminée 25 formant barrière anti-propagation vers l'extérieur des micro-ondes émises dans la cavité d'application. En partie supérieure du réacteur 30, il est prévu une tubulure 36 plongeant dans le réacteur 30, et plus particulièrement dans le produit à traiter, et traversant le couvercle 40 via le conduit 41 de façon à pouvoir être raccordée à l'extérieur de la cavité d'application à une pompe (non représentée) de sortie du produit traité.

Il est possible d'ajuster la position de la tubulure 36 en hauteur en fonction du produit ou du niveau du produit à traiter.

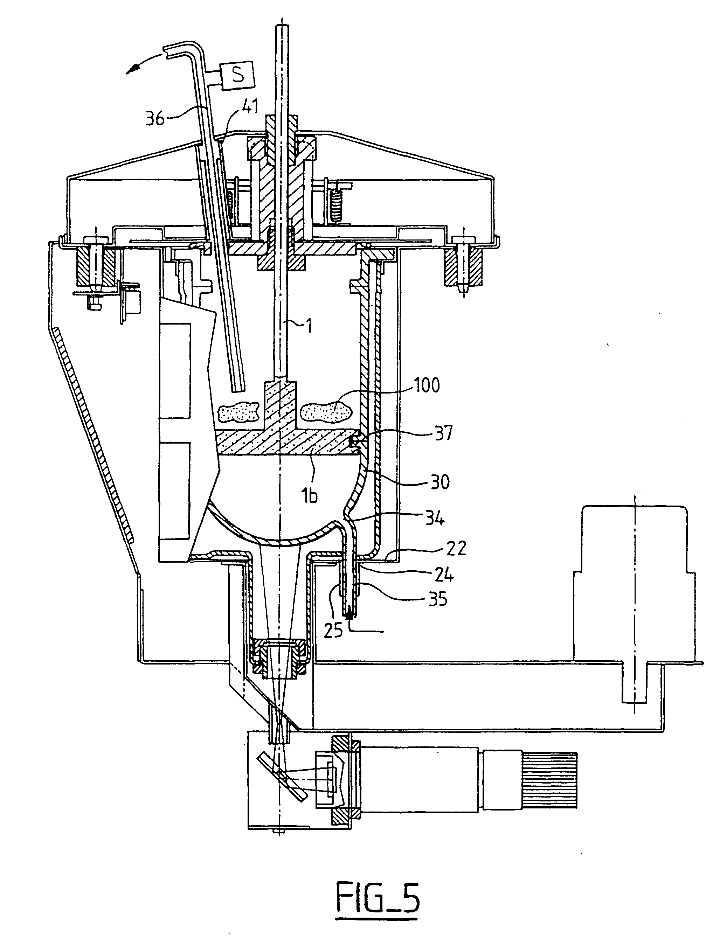

Sur la figure 5, on a représenté un quatrième mode de réalisation du dispositif conforme à la présente invention. Selon ce mode de réalisation, le dispositif est agencé pour réaliser des réactions chimiques en continu sur des gaz. On retrouve alors l'ouverture 34 prévue dans la partie de fond du réacteur 30, raccordée à la tubulure 35 traversant le doigt de gant et la cavité d'application par l'orifice 24 prévu dans la paroi de fond 22 de la cavité d'application et bordé par la cheminée 25, pour être raccordée à une amenée de produit et /ou de réactif gazeux. De plus, il est prévu également une tubulure 36 plongeant à l'intérieur du réacteur 30 et émergeant à l'extérieur de la cavité d'application via le conduit 41 prévu dans le couvercle 40 fermant l'ouverture supérieure de la cavité d'application, pour son raccordement à un système de stockage et de filtration des fines.

Selon le mode de réalisation représenté sur la figure 5, l'arbre 1 de l'agitateur est utilisé ici comme un arbre support portant à son extrémité inférieure plongeant dans le réacteur, un support fritté 1b s'étendant transversalement à l'axe X et bloqué sur des tétons intérieurs 37 du réacteur 30. Le support fritté 1b sépare l'intérieur du réacteur en deux chambres, une chambre inférieure communiquant avec l'orifice 34 raccordé vers l'extérieur par la turbulure 35 et une chambre supérieure de réaction communiquant avec la tubulure 36.

Le réactif ou le catalyseur 100 se présente sous la forme d'un gaz situé dans la chambre supérieure de réaction du réacteur, l'entrée du produit gazeux se fait par la tubulure 35 dans la chambre inférieure. Après avoir traversé le support fritté 1b, la sortie des gaz traités se fait par l'intermédiaire de la tubulure 36 vers un système de stockage et de filtration des fines. On peut voir qu'au niveau de la sortie de la tubulure 36, il est prévu une soupape de sécurité S en cas de fonctionnement sous pression du dispositif.

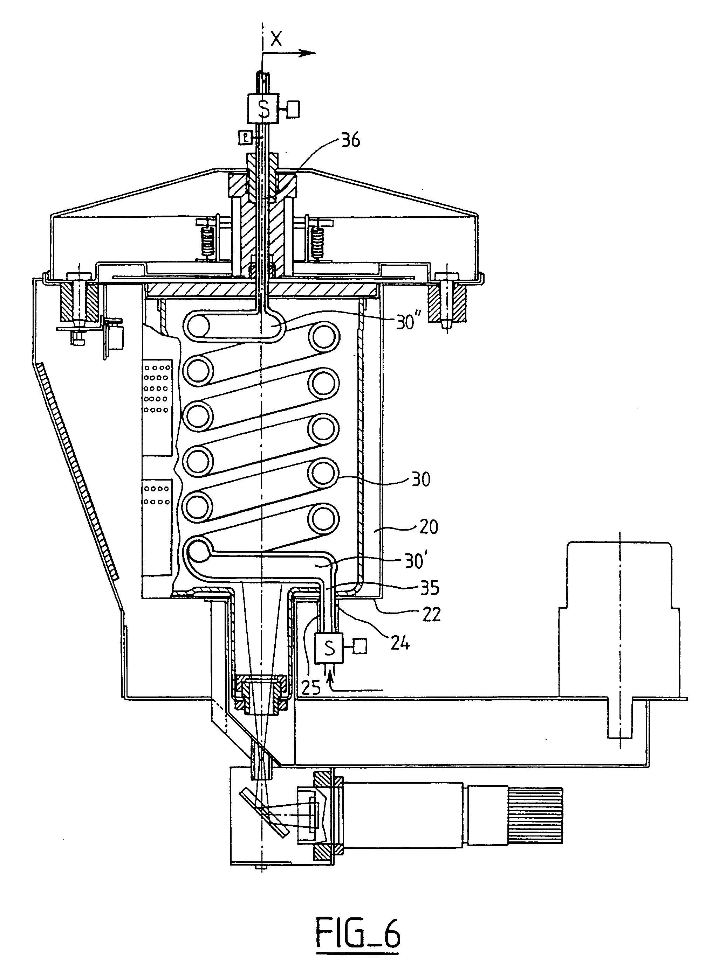

Sur la figure 6, on a représenté un autre mode de réalisation de fonctionnement en continu du dispositif conforme à la présente invention. Selon le mode de réalisation de la figure 6, le réacteur 30 dudit dispositif se présente sous la forme d'un tube parcourant un chemin en zigzag à l'intérieur de la cavité d'application entre la paroi de fond de la cavité d'application et son ouverture supérieure. Le réacteur 30 comporte en partie inférieure dans le fond de la cavité d'application une portion de tube transversale 30' par rapport à l'axe X de la cavité d'application qui se raccorde par la tubulure 35 verticale à l'extérieur de la cavité d'application via l'orifice 24 prévu dans la paroi de fond 22 de la cavité d'application 20. Par cette tubulure 35, on fait arriver du produit et/ou du réactif par l'intermédiaire d'une pompe ici non représentée. Le produit et le réactif mélangés parcourent le chemin en zigzag défini par le réacteur en forme de tube 30 pour arriver au niveau du couvercle 40.

Juste en dessous du couvercle 40, le tube 30 comporte une partie transversale horizontale 30" connectée à une tubulure 36 qui traverse selon l'axe X de manière étanche le couvercle 40 et est relié à l'extérieur du dispositif, à une pompe ici non représentée. Par la tubulure 36 sort le produit traité vers une unité de stockage ou de recyclage. Un tel système représenté sur la figure 6 peut fonctionner à pression atmosphérique ou sous pression. Dans le cas, où il fonctionne sous pression, il est prévu deux soupapes de sécurité S, une soupape S est positionnée à l'entrée du réacteur à l'extérieur de la cavité d'application 20 sur la tubulure 35 et une soupape de sécurité S est placée à la sortie du réacteur à l'extérieur de la cavité d'application 20 sur la tubulure 36.

Par l'intermédiaire de ces soupapes de sécurité, on peut régler et ajuster la pression à l'intérieur du réacteur 30.

Bien entendu, selon une variante non représentée, on peut prévoir que le tube 30 formant réacteur suive une trajet droit à l'intérieur de la cavité d'application.

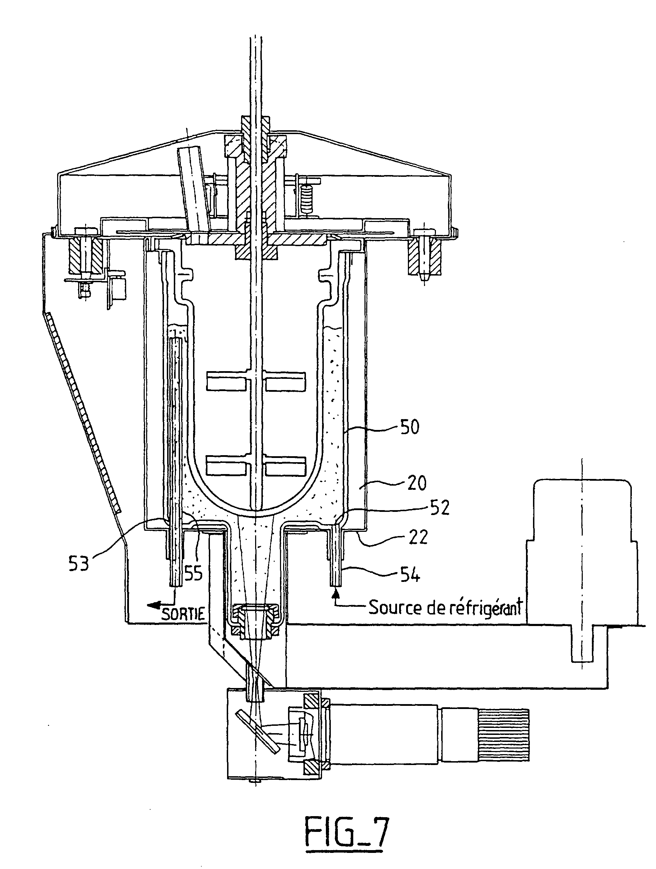

Sur la figure 7, on représenté un dernier mode de réalisation de fonctionnement en intermittence du dispositif conforme à l'invention, selon lequel le doigt de gant 50 forme un récipient pour contenir si besoin est, un réfrigérant liquide ou gazeux permettant de refroidir le produit contenu dans le réacteur afin de stopper ou ralentir éventuellement la réaction chimique ou physico-chimique en cours et éviter ainsi un emballement de ladite réaction.

Pour ce faire, le doigt de gant 50 comporte dans sa paroi de fond, deux orifices 52, 53 positionnés de part et d'autre de la partie centrale 51 qui s'engage dans le guide d'onde, symétriquement à l'axe X. Dans lesdits orifices 52, 53 sont placées respectivement des tubulures 54, 55. Lesdites tubulures 54, 55 traversent de manière étanche la paroi de fond 22 de la cavité d'application 20 pour émerger à l'extérieur de celle-ci.

Une première tubulure 54 comporte une extrémité interne qui débouche au niveau de l'orifice 52 à l'intérieur du doigt de gant et est raccordée à son extrémité externe à une source de réfrigérant pour permettre le remplissage en réfrigérant dudit doigt de gant.

La deuxième tubulure 55 se prolonge à l'intérieur du doigt de gant jusqu'à un certain niveau de remplissage et fonctionne à la manière d'un siphon pour vider le doigt de gant au-delà d'un certain niveau de réfrigérant. La sortie de cette deuxième tubulure peut éventuellement être raccordée à une pompe non représentée pour accélérer le débit de sortie du réfrigérant.

## Revendications

1. Dispositif pour réaliser des réactions chimiques ou physicochimiques sur une quantité nominale de produit de l'ordre de 1 litre et de préférence de l'ordre de 800 millilitres, comprenant un générateur de micro-ondes (10) et une cavité d'application des micro-ondes (20) destinée à contenir un réacteur (30) de grande capacité de rétention, réalisé en matériau transparent aux micro-ondes, apte à contenir la quantité de produit à traiter, **caractérisé en ce que** ladite cavité d'application (20) est délimitée par une paroi latérale (21) fermée de forme sensiblement cylindrique de révolution autour d'un axe X ainsi que par une paroi de fond (22) pourvue d'une entrée (23) des micro-ondes dans la cavité d'application (20), et est ouverte supérieurement pour la mise en place et l'extraction du réacteur (30), **en ce que** le générateur des micro-ondes (10) est apte à émettre un champ micro-ondes monomode qui se propage via ladite entrée (23) suivant l'axe X dans la cavité d'application (20), cette dernière étant dimensionnée en fonction de la longueur d'onde du mode résonnant du champ micro-ondes dans la cavité d'application (20) le long de l'axe X de sorte que la valeur de ce champ micro-ondes est prédéterminée dans tous les plans transversaux à l'axe X dans la cavité d'application (20), et **en ce qu'**il est prévu un couvercle (40) destiné à fermer l'ouverture supérieure de la cavité d'application (20), de manière étanche vis-à-vis de la propagation des micro-ondes vers l'extérieur, et comportant au moins un conduit (41) qui permet de raccorder l'intérieur de la cavité d'application (20) à l'extérieur de sorte que l'intérieur de ladite cavité d'application (20) est soumis à la pression atmosphérique.

2. Dispositif selon la revendication 1, **caractérisé en ce que** la cavité d'application (20) présente entre l'entrée (23) des micro-ondes et son ouverture supérieure une hauteur correspondante à trois demi-longueurs d'onde du mode résonnant du champ micro-ondes dans ladite cavité.

3. Dispositif selon l'une des revendications 1 ou 2, **caractérisé en ce que** le couvercle (40) comporte sur sa face interne tournée vers la cavité d'application (20) un piège quart d'onde.

4. Dispositif selon l'une quelconque des revendications 1 à 3, **caractérisé en ce que** le couvercle (40) comprend sur son bord extérieur aux moins deux poignées de verrouillage (45', 45") placées symétriquement par rapport à l'axe X et aptes à venir se verrouiller sur une partie de support liée à la cavité d'application (20).

5. Dispositif selon la revendication 4, **caractérisé en ce qu'**il est prévu des contacteurs (46', 46", 46"') aptes à émettre un signal de sécurité lorsque les poignées de verrouillage (45', 45") sont verrouillées sur ladite partie de support.

6. Dispositif selon l'une quelconque des revendications 1 à 5, **caractérisé en ce que** le couvercle (40) comporte au moins trois conduits (41, 42, 43) raccordant l'intérieur de la cavité d'application (20) à l'extérieur, deux conduits (42, 43) étant placés symétriquement de part et d'autre de l'axe X, lesdits conduits (41, 42, 43) permettant notamment le prélèvement d'échantillons de produit au cours de la réaction chimique sur la grande quantité de produit, l'extraction des vapeurs émises par la réaction chimique, l'injection de produits et/ou de réactifs au cours de la réaction chimique.

7. Dispositif selon l'une quelconque des revendications 1 à 6, **caractérisé en ce que** le générateur des micro-ondes (10) est raccordé à l'intérieur de la cavité d'application (20) par l'intermédiaire d'un guide d'ondes (11), comportant une partie de raccordement (11b) s'étendant selon l'axe X de la cavité d'application (20) et débouchant à son extrémité dans ladite cavité d'application (20) via ladite entrée (23).

8. Dispositif selon l'une quelconque des revendications 1 à 7, **caractérisé en ce qu'**il est prévu un dispositif de mesure de la température du produit contenu dans le réacteur, disposé sur un côté latéral de la cavité d'application et comprenant un capteur infrarouge apte à capter via un orifice prévu dans la paroi latérale de ladite cavité d'application, un rayonnement infrarouge émis selon un axe transversal à l'axe X par le produit chauffé dans le réacteur.

9. Dispositif selon l'une quelconque des revendications 1 à 7, **caractérisé en ce qu'**il est prévu un dispositif de mesure de la température (60) du produit contenu dans le réacteur, disposé en dessous de la cavité d'application (20) selon l'axe X, ledit dispositif de mesure de la température (60) comprenant un capteur infrarouge (61) apte à capter un rayonnement infrarouge émis selon l'axe X par le produit chauffé dans le réacteur (30).

10. Dispositif selon la revendication 9, **caractérisé en ce que** la mesure de la température est réalisée au travers d'une ouverture formée dans une paroi d'un guide d'ondes (11) raccordé à la cavité d'application (20), ladite ouverture étant bordée extérieurement par une cheminée (64) formant barrière d'absorption des micro-ondes afin d'éviter leur propagation vers l'extérieur.

11. Dispositif selon l'une des revendications 9 ou 10, **caractérisé en ce qu'**il est prévu un miroir (62) placé à 45 degré sur l'axe X, apte à transmettre le rayonnement infrarouge émis par le produit chauffé dans le réacteur (30), vers le capteur infrarouge (61) positionné de manière décalée par rapport à l'axe X de la cavité d'application (20).

12. Dispositif selon l'une quelconque des revendications 1 à 11, **caractérisé en ce qu'**il est prévu un agitateur comportant un arbre d'entraînement en rotation (1) portant des pales d'agitation (1a) destinées à être plongées dans la quantité de produit contenue dans le réacteur (30) placé à l'intérieur de la cavité d'application (20), l'arbre d'entraînement en rotation (1) s'étendant selon l'axe X et émergeant à l'extérieur de la cavité d'application (20) en traversant de manière étanche le couvercle (40).

13. Dispositif selon l'une quelconque des revendications 1 à 12, **caractérisé en ce que** le réacteur (30) comporte d'une part une paroi latérale de forme sensiblement cylindrique de révolution autour de l'axe X, qui se raccorde continuement à un fond fermé arrondi, et d'autre part une ouverture supérieure (31) dont la dimension correspond sensiblement à celle de l'ouverture supérieure de la cavité d'application (20).

14. Dispositif selon l'une quelconque des revendications 7 à 13, **caractérisé en ce que** le réacteur est positionné à l'intérieur d'un doigt de gant (50) placé dans la cavité d'application (20), ledit doigt de gant (50) comportant un fond dont la partie centrale (51) se prolonge à l'intérieur de la partie de raccordement (11b) du guide d'ondes (11).

15. Dispositif selon la revendication 14, **caractérisé en ce qu'**il est prévu dans le fond de la partie centrale du doigt de gant (50, 51) une fenêtre de visée (63) pour le rayonnement infrarouge de mesure de la température.

16. Dispositif selon l'une des revendications 14 ou 15, **caractérisé en ce que** le fond du doigt de gant (50) comporte deux orifices (52, 53) placés symétriquement par rapport à l'axe X de la cavité d'application (20) et dans chacun desquels est positionnée une tubulure (54, 55) qui traverse de manière étanche la paroi de fond (22) de ladite cavité d'application (20) pour émerger à l'extérieur de celle-ci, lesdites tubulures (54, 55) permettant l'arrivée et la sortie d'un réfrigérant à l'intérieur du doigt de gant (50) autour du réacteur (30) afin de refroidir rapidement le produit contenu dans le réacteur (30) pour stopper ou ralentir éventuellement la réaction chimique en cours.

17. Dispositif selon l'une quelconque des revendications 1 à 16, **caractérisé en ce qu'**en vue d'un fonctionnement en continu, le réacteur (30) comporte dans son fond une ouverture (34) débouchant dans une tubulure (35) destinée à être introduite dans un orifice (24) prévu dans la paroi de fond (22) de la cavité d'application (20) et débouchant à l'extérieur de ladite cavité d'application pour son raccordement avec une pompe d'amenée de produit et/ou de réactif, ledit orifice (24) prévu dans la paroi de fond (22) de la cavité d'application (20) étant bordé extérieurement par une cheminée (25) formant barrière à la propagation vers l'extérieur des micro-ondes, et un des conduits (41) du couvercle (40) prévu pour le raccordement de la cavité d'application (20) avec l'extérieur permet de relier supérieurement via une tubulure de sortie (36) l'intérieur du réacteur (30) à une pompe de sortie du produit traité.

18. Disposifif selon la revendication 17, **caractérisé en ce qu'**en vue de réaliser des réactions chimiques en continu sur des gaz, il est prévu un arbre support (1) s'étendant selon l'axe X et portant à son extrémité plongeant dans le réacteur (30) un support fritté (1b) qui s'étend transversalement à l'axe X et séparant l'intérieur du réacteur (30) en deux chambres, une chambre inférieure d'arrivée des produits gazeux à traiter communiquant via l'orifice (34) prévu dans le fond du réacteur (30) avec la tubulure d'entrée (35) et une chambre supérieure de réaction où se trouve un réactif ou catalyseur (100) sous forme de gaz, communiquant avec la tubulure (36) par laquelle s'effectue la sortie des gaz traités.

19. Dispositif selon la revendication 17, **caractérisé en ce que** le réacteur (30) se présente sous la forme d'un tube suivant un trajet en zigzag ou droit dans la cavité d'application (20), ledit tube comprenant une partie supérieure de raccordement (36) à l'extérieur de la cavité d'application (20) qui traverse de manière étanche le couvercle (40) et une partie inférieure (35) de raccordement à l'extérieur qui traverse de manière étanche un orifice (24) prévu dans la paroi de fond (22) de la cavité d'application (20) et débouche vers l'extérieur de la cavité.

20. Dispositif selon l'une quelconque des revendications 17 à 19, **caractérisé en ce qu'**à l'extérieur de la cavité d'application (20), il est prévu sur la tubulure d'entrée (35) et sur la tubulure de sortie (36) des soupapes de sécurité (S) permettant un fonctionnement du dispositif sous pression.

21. Dispositif selon l'une des revendications 1 à 12, **caractérisé en ce que** le réacteur (30) est un réacteur fermé pour un fonctionnement sous pression ou sous dépression, constitué par des parois latérales (30a), une paroi supérieure (30b) et une paroi inférieure (30b) assemblées de manière à délimiter un espace intérieur fermé et étanche vis-à-vis de l'extérieur, la paroi supérieure (30b) du réacteur (30) étant liée à une plaque de maintien (30d) vissée dans un filetage (26) prévu en partie supérieure sur la face interne de la paroi latérale (21) de la cavité d'application (20).

22. Dispositif selon l'une quelconque des revendications 1 à 21, **caractérisé en ce que** le réacteur (30) présente une capacité de rétention de produit et/ou de réactif d'environ un litre.

## Claims

1. A device for carrying out chemical or physicochemical reactions on a nominal quantity of substance of about 1 liter, and preferably of about 800 milliliters, the device comprising a microwave generator (10) and an application cavity (20) for applying microwaves and designed to contain a reactor (30) of large retention capacity, made of a material that is transparent to microwaves, and capable of containing the quantity of substance to be treated, the device being **characterized in that** said application cavity (20) is defined by a closed side wall (21) that is substantially a circular cylinder about an axis X, and by a bottom wall (22) provided with an inlet (23) to enable the microwaves to enter the application cavity (20), and is open at the top for receiving and removing the reactor (30), **in that** the microwave generator (10) is capable of emitting a single-mode microwave field which propagates via said inlet (23) along the axis X in the application cavity (20), the size of the application cavity being determined as a function of the wavelength of the resonant mode of the microwave field in the application cavity (20) along the axis X so that the value of the microwave field is predetermined in all transverse planes along the axis X in the application cavity (20), and **in that** a cover (40) is provided for closing in sealed manner the top opening of the application cavity (20), thereby preventing the microwaves from propagating to the outside, and including at least one duct (41) which enables the inside of the application cavity (20) to be connected to the outside so that the inside of said application cavity (20) is subjected to atmospheric pressure.

2. A device according to claim 1, **characterized in that** the application cavity (20) has, between the microwave inlet (23) and its top opening, a height corresponding to three half-wavelengths of the resonant mode of the microwave field in said cavity.

3. A device according to claim 1 or claim 2, **characterized in that** the cover (40) has a quarter-wave trap on its inside face facing the application cavity (20).

4. A device according to any one of claims 1 to 3, **characterized in that** the cover (40) has at least two locking levers (45', 45") on its outer edge placed symmetrically about the axis X and capable of being locked onto a support piece linked to the application cavity (20).

5. A device according to claim 4, **characterized in that** switches (46', 46", 46"') are provided which are capable of issuing a safety signal when the locking levers (45', 45") are locked onto said support piece.

6. A device according to any one of claims 1 to 5, **characterized in that** the cover (40) includes at least three ducts (41, 42, 43) connecting the inside of the application cavity (20) to the outside, two ducts (42, 43) being placed symmetrically on either side of the axis X, said ducts (41, 42, 43) making it possible, in particular, to remove samples of substance during the chemical reaction on the large quantity of substance, to extract any vapor given off by the chemical reaction, and to inject substances and/or reagents during the chemical reaction.

7. A device according to any one of claims 1 to 6, **characterized in that** the microwave generator (10) is connected to the inside of the application cavity (20) by means of a waveguide (11) which includes a connection piece (11b) extending along the axis X of the application cavity (20) and opening out at its end in said application cavity (20) via said inlet (23).

8. A device according to any one of claims 1 to 7, **characterized in that** a temperature measuring device is provided for measuring the temperature of the substance contained in the reactor, said temperature measuring device being placed laterally on a side of the application cavity and comprising an infrared sensor capable of detecting, via an orifice provided in the side wall of said application cavity, infrared radiation emitted along an axis transverse to the axis X, by the substance heated in the reactor.

9. A device according to any one of claims 1 to 7, **characterized in that** a temperature measuring device (60) is provided for measuring the temperature of the substance contained in the reactor, said temperature measuring device being placed beneath the application cavity (20) on the axis X, said temperature measuring device (60) comprising an infrared sensor (61) capable of detecting infrared radiation emitted along the axis X by the substance heated in the reactor (30).

10. A device according to claim 9, **characterized in that** the temperature measurement is carried out through an opening made in a wall of a waveguide (11) connected to the application cavity (20), said opening being bordered externally by a chimney (64) forming a microwave absorption barrier so as to prevent the microwaves from propagating to the outside.

11. A device according to claim 9 or claim 10, **characterized in that** a mirror (62) is provided placed at 45 degrees on the axis X and capable of transmitting the infrared radiation emitted by the substance heated in the reactor (30) to the infrared sensor (61) positioned so as to be offset relative to the axis X of the application cavity (20).

12. A device according to any one of claims 1 to 11, **characterized in that** a stirrer is provided which has a rotary drive shaft (1) carrying stirring blades (1a) intended to be immersed in the quantity of substance contained in the reactor (30) placed inside the application cavity (20), the rotary drive shaft (1) extending along the axis X and emerging outside the application cavity (20) by passing in sealed manner through the cover (40).

13. A device according to any one of claims 1 to 12, **characterized in that** the reactor (30) includes, firstly, a side wall which is substantially a circular cylinder about the axis X and is joined continuously to a rounded closed bottom, and secondly, a top opening (31) having a size that substantially corresponds to the size of the top opening of the application cavity (20).

14. A device according to any one of claims 7 to 13, **characterized in that** the reactor is positioned inside a well (50) placed in the application cavity (20), said well (50) having a bottom having a central portion (51) that extends inside the connection piece (11b) of the waveguide (11).

15. A device according to claim 14, **characterized in that** an observation window (63) for the infrared radiation for measuring the temperature is provided in the bottom of the central portion of the well (50, 51).

16. A device according to claim 14 or claim 15, **characterized in that** the bottom of the well (50) has two orifices (52, 53) placed symmetrically relative to the axis X of the application cavity (20) and in each of which is positioned a pipe (54, 55) which passes in sealed manner through the bottom wall (22) of said application cavity (20) in order to emerge outside said application cavity, said pipes (54, 55) allowing a coolant to enter and leave the inside of the well (50) around the reactor (30) so as to rapidly cool the substance contained in the reactor (30), in order, optionally, to slow down or stop the chemical reaction in progress.

17. A device according to any one of claims 1 to 16, **characterized in that**, for the purpose of operating continuously, the reactor (30) includes, in its bottom, an opening (34) which opens out into a pipe (35) which is intended to be inserted into an orifice (24) provided in the bottom wall (22) of the application cavity (20) and which opens out outside said application cavity in order for it to be connected to a pump for supplying substance and/or reagent, said orifice (24) provided in the bottom wall (22) of the application cavity (20) being bordered externally by a chimney (25), forming a barrier so as to prevent the microwaves from propagating to the outside, and one of the ducts (41) in the cover (40) provided for connecting the application cavity (20) to the outside makes it possible to connect, at the top, the inside of the reactor (30) via an outlet pipe (36) to a pump for removing the treated substance.

18. A device according to claim 17, **characterized in that**, for the purpose of carrying out continuous chemical reactions on gases, a support shaft (1) is provided which extends along the axis X and carries, at its end immersed in the reactor (30), a sintered support (1b) which extends transversely to the axis X and separates the inside of the reactor (30) into two chambers - a bottom chamber for supplying the gaseous substances to be treated, said bottom chamber communicating with the inlet pipe (35) via the orifice (34) provided in the bottom of the reactor (30), and a top reaction chamber where a reagent or catalyst (100) is found in the form of gas, said top chamber communicating with the pipe (36) via which treated gases are removed.

19. A device according to claim 17, **characterized in that** the reactor (30) is in the form of a tube which follows a zigzag or straight path in the application cavity (20), said tube comprising a top connection piece (36) for connecting to the outside of the application cavity (20), which top connection piece passes in a sealed manner through the cover (40), and a bottom connection piece (35) for connecting to the outside, which bottom connection piece passes in a sealed manner through an orifice (24) provided in the bottom wall (22) of the application cavity (20) and opens out outside the cavity.

20. A device according to any one of claims 17 to 19, **characterized in that** safety valves (S) allowing the device to operate at an increased pressure are provided outside the application cavity (20) on the inlet pipe (35) and on the outlet pipe (36).

21. A device according to any one of claims 1 to 12, **characterized in that** the reactor (30) is a closed reactor for operation at an increased pressure or at a reduced pressure, said reactor being constituted by side walls (30a), a top wall (30b), and a bottom wall (30b) joined together so as to define a closed inside space that is sealed from the outside, the top wall (30b) of the reactor (30) being linked to a holding plate (30d) screwed into a thread (26) provided in the top portion on the inside face of the side wall (21) of the application cavity (20).

22. A device according to any one of claims 1 to 21, **characterized in that** the reactor (30) has a substance and/or reagent retention capacity of approximately 1 liter.

## Patentansprüche

1. Vorrichtung zum Durchführen von chemischen oder physicochemischen Reaktionen einer Produktmenge der Größenordnung eines Liters und bevorzugt 800 Milliliter, welche einen Mikrowellengenerator (10) und einen Mikrowellenanwendungshohlraum (20) umfaßt, der dazu bestimmt ist, ein Reaktionsgefäß (30) mit großer Rückhaltekapazität aufzunehmen, welches aus einem für Mikrowellen transparenten Material hergestellt ist und dazu geeignet ist, die Menge des zu behandelnden Produkts aufzunehmen, dadurch charakterisiert, daß der Anwendungshohlraum (20) durch eine geschlossene Seitenwand (21) mit im wesentlichen rotationszylindrischer Form um eine Achse X sowie durch eine Bodenwand (22), die mit einem Eingang (23) der Mikrowellen in den Anwendungshohlraum (20) versehen ist, begrenzt ist und zum Einbau und zur Herausnahme des Reaktionsgefäßes (30) oben offen ist, und dadurch, daß der Mikrowellengenerator (10) dazu ausgelegt ist, ein monomodales Mikrowellenfeld auszusenden, das sich via des Eingangs (23) entlang der Achse X im Anwendungshohlraum (20) ausbreitet, wobei letzterer in Abhängigkeit von der Wellenlänge des Resonanzmodes des Mikrowellenfeldes im Anwendungshohlraum (20) entlang der Achse X derart dimensioniert ist, daß der Wert des Mikrowellenfeldes in allen zur Achse X transversalen Ebenen im Anwendungshohlraum (20) vorbestimmt ist, und dadurch, daß eine Abdeckung (40) vorgesehen ist, die dazu bestimmt ist, die obere Öffnung des Anwendungshohlraums (20) dicht bezüglich der Ausbreitung der Mikrowellen nach außen abzuschließen, und welcher wenigstens eine Leitung (41) aufweist, die es erlaubt, das Innere des Anwendungshohlraums (20) mit dem Außenraum derart zu verbinden, daß im Inneren des Anwendungshohlraums (20) Atmosphärendruck herrscht.

2. Vorrichtung nach Anspruch 1, **dadurch gekennzeichnet, daß** der Anwendungshohlraum (20) zwischen dem Eingang (23) der Mikrowellen und seiner oberen Öffnung eine Höhe aufweist, die drei halben Wellenlängen des Resonanzmodes des Mikrowellenfeldes im Hohlraum entspricht.

3. Vorrichtung nach einem der Ansprüche 1 oder 2, **dadurch gekennzeichnet, daß** die Abdeckung (40) auf ihrer zum Anwendungshohlraum (20) gedrehten inneren Seite eine Viertelwellenlängenfalle aufweist.

4. Vorrichtung nach einem der Ansprüche 1 bis 3, **dadurch gekennzeichnet, daß** die Abdeckung (40) auf ihrem äußeren Rand mindestens zwei Verriegelungsgriffe (45',45") umfaßt, die symmetrisch bezüglich der Achse X angeordnet sind und dazu geeignet sind, mit einer mit dem Anwendungshohlraum (20) verbundenen Halterung zu arretieren.

5. Vorrichtung nach Anspruch 4, **dadurch gekennzeichnet, daß** Schalter (46',46'',46''') vorgesehen sind, die dazu geeignet sind, ein Sicherheitssignal auszusenden, wenn die Verriegelungsgriffe (45',45'') mit der Halterung verriegelt sind.

6. Vorrichtung nach einem der Ansprüche 1 bis 5, **dadurch gekennzeichnet, daß** die Abdeckung (40) mindestens drei Leitungen (41,42,43) aufweist, die das Innere des Anwendungshohlraums (20) mit dem Äußeren verbinden, wobei zwei Leitungen (42,43) symmetrisch auf der einen und der anderen Seite der Achse X angeordnet sind, wobei die Leitungen (41,42,43) insbesondere die Entnahme der Produktproben im Laufe der chemischen Reaktion mit der großen Produktmenge, das Entziehen des durch die chemische Reaktion ausgesendeten Dampfes und das Einbringen der Produkte und/oder der Chemikalien im Laufe der chemischen Reaktion.

7. Vorrichtung nach einem der Ansprüche 1 bis 6, **dadurch gekennzeichnet, daß** der Mikrowellengenerator (10) mit dem Inneren des Anwendungshohlraums (20) über einen Wellenleiter (11) verbunden ist, der einen Teil der Verbindung (11b) aufweist, der sich entlang der Achse X des Anwendungshohlraums (20) erstreckt und an seinem Ende via des Eingangs (23) in den Anwendungshohlraum (20) einmündet.

8. Vorrichtung nach einem der Ansprüche 1 bis 7, **dadurch gekennzeichnet, daß** eine Vorrichtung zur Messung der Temperatur des im Reaktionsgefäß enthaltenen Produkts vorgesehen ist, welches an einer Seite des Anwendungshohlraums angeordnet ist und einen Infrarotsensor umfaßt, der dazu geeignet ist, via eine in der Seitenwand des Anwendungshohlraums vorgesehenen Öffnung eine Infrarotstrahlung aufzufangen, die durch das erhitzte Produkt im Reaktionsgefäß entlang einer zur Achse X transversalen Achse emittiert wird.

9. Vorrichtung nach einem der Ansprüche 1 bis 7, **dadurch gekennzeichnet, daß** eine Vorrichtung (60) zur Messung der Temperatur des im Reaktionsgefäß enthaltenen Produkts vorgesehen ist, welches unterhalb des Anwendungshohlraums (20) entlang der Achse X angeordnet ist, wobei die Vorrichtung (60) zur Messung der Temperatur einen Infrarotsensor (61) umfaßt, der dazu geeignet ist, eine Infrarotstrahlung aufzufangen, die durch das erhitzte Produkt im Reaktionsgefäß (30) entlang der Achse X emittiert wird.

10. Vorrichtung nach Anspruch 9, **dadurch gekennzeichnet, daß** die Temperaturmessung über eine in einer Wand des Wellenleiters (11) gebildeten Öffnung durchgeführt wird, welche mit dem Anwendungshohlraum (20) verbunden ist, wobei die Öffnung außen durch einen Schacht (64) begrenzt ist, der eine Barriere zur Absorption der Mikrowellen bildet, um deren Ausbreitung nach außen zu verhindern.

11. Verfahren nach einem der Ansprüche 9 oder 10, **dadurch gekennzeichnet, daß** ein Spiegel (62) vorgesehen ist, der unter 45° zur Achse X angeordnet ist und dazu geeignet ist, die durch das erhitzte Produkt im Reaktionsgefäß (30) emittierte Infrarotstrahlung zum Infrarotsensor (61) zu übertragen, der bezüglich der Achse X des Anwendungshohlraums (20) versetzt angeordnet ist.

12. Vorrichtung nach einem der Ansprüche 1 bis 11, **dadurch gekennzeichnet, daß** eine Rührmaschine vorgesehen ist, die eine treibende Rotationswelle (1) aufweist, die Rührarme (1a) trägt, die dazu bestimmt sind, in die Produktmenge, die im im Inneren des Anwendungshohlraums (20) angeordnetem Reaktionsgefäß (30) enthalten ist, eingetaucht zu werden, wobei sich die treibende Rotationswelle (1) entlang der Achse X erstreckt und ins Äußere des Anwendungshohlraums (20) ragt, wobei die Abdeckung (40) auf dicht abschließende Weise durchquert wird.

13. Vorrichtung nach einem der Ansprüche 1 bis 12, **dadurch gekennzeichnet, daß** das Reaktionsgefäß (30) einerseits eine Seitenwand mit im wesentlichen zylindrischer Rotationsform um die Achse X, die fortlaufend mit einem geschlossenen abgerundeten Boden verbunden ist, und andererseits eine obere Öffnung (31) aufweist, deren Ausmaß im wesentlichen dem der oberen Öffnung des Anwendungshohlraums (20) entspricht.

14. Vorrichtung nach einem der Ansprüche 7 bis 13, **dadurch gekennzeichnet, daß** das Reaktionsgefäß im Inneren einer Hülse (50) angeordnet ist, die im Anwendungshohlraum (20) angeordnet ist, wobei die Hülse (50) einen Boden aufweist, dessen zentraler Teil (51) sich ins Innere des Verbindungsteils (11b) des Wellenleiters (11) verlängert.

15. Vorrichtung nach Anspruch 14, **dadurch gekennzeichnet, daß** ein Sichtfenster (63) am Boden des zentralen Teils der Hülse (50,51) für die Infrarotstrahlung der Temperaturmessung vorgesehen ist.

16. Vorrichtung nach einem der Ansprüche 14 oder 15, **dadurch gekennzeichnet, daß** der Boden der Hülse (50) zwei Öffnungen (52,53) aufweist, die bezüglich der Achse X des Anwendungshohlraums (20) symmetrisch angeordnet sind und in denen jeweils ein Rohransatz (54,55) angeordnet ist, der die Bodenwand (22) des Anwendungshohlraums (20) auf dichtabschließende Weise durchquert, um an dessen Außenbereich zu gelangen, wobei die Rohransätze (54,55) den Ein- und Ausgang eines Kühlmittels zum Inneren der Hülse (50) um das Reaktionsgefäß (30) erlauben, um schnell das im Reaktionsgefäß (30) enthaltene Produkt abzukühlen, um gegebenenfalls die laufende chemische Reaktion zu stoppen oder zu verlangsamen.

17. Vorrichtung nach einem der Ansprüche 1 bis 16, **dadurch gekennzeichnet, daß** im Hinblick auf einen kontinuierlichen Betrieb das Reaktionsgefäß (30) an seinem Boden eine Öffnung (34) aufweist, die in einen Rohransatz (34) mündet, der dazu bestimmt ist, in eine Öffnung (24) eingeführt zu werden, die in der Bodenwand (22) des Anwendungshohlraums (20) vorgesehen ist und ins Äußere des Anwendungshohlraums zur Verbindung mit einer Pumpe zum Zuführen des Produkts und/oder der Chemikalie mündet, wobei die in der Bodenwand (22) des Anwendungshohlraums (20) vorgesehene Öffnung (24) außen durch einen Schacht (25) begrenzt wird, der für die Ausbreitung der Mikrowellen nach außen eine Barriere bildet, und daß eine der Leitungen (41) der Abdeckung (40), die zur Verbindung des Anwendungshohlraums (20) mit dem Äußeren vorgesehen ist, es erlaubt, darüber das Innere des Reaktionsgefäßes (30) über einen Ausgangsstutzen (36) mit einer Pumpe zum Ausführen des behandelten Produkts zu verbinden.

18. Vorrichtung nach Anspruch 17, **dadurch gekennzeichnet, daß** im Hinblick auf das kontinuierliche Durchführen von chemischen Reaktionen mit Gasen eine Stützwelle (1) vorgesehen ist, die sich entlang der Achse X erstreckt und an seinem Ende, das in das Reaktionsgefäß (30) eintaucht, einen gesinterten Träger (1b) trägt, der sich transversal zur Achse X erstreckt und das Innere des Reaktionsgefäßes (30) in zwei Kammern teilt, wobei eine untere Kammer zum Eingang der zu behandelnden gasförmigen Produkte über die Öffnung 34, die am Boden des Reaktionsgefäßes (30) vorgesehen ist, mit dem Eingangsstutzen (35) in Verbindung steht und eine obere Reaktionskammer, in der sich eine Chemikalie oder ein Katalysator in Form eines Gases befindet, mit dem Rohransatz (36) in Verbindung steht, durch den sich das Abführen des behandelten Gases vollzieht.

19. Vorrichtung nach Anspruch 17, **dadurch gekennzeichnet, daß** das Reaktionsgefäß (30) eine Röhrenform aufweist, die im Anwendungshohlraum (20) einem Zick-Zack-Weg oder geraden Weg folgt, wobei die Röhre ein oberes Teil (36) zur Verbindung mit dem Äußeren des Anwendungshohlraums (20), welche die Abdeckung (40) auf dicht abschließende Weise durchquert, und ein unteres Teil (35) zur Verbindung mit dem Äußeren umfaßt, welches auf dicht abschließende Weise eine Öffnung (24) durchquert, die im Boden der Wand (22) des Anwendungshohlraums (20) vorgesehen ist und ins Äußere des Hohlraums mündet.

20. Vorrichtung nach einem der Ansprüche 17 bis 19, **dadurch gekennzeichnet, daß** im Äußeren des Anwendungshohlraums (20) am Eingangsstutzen (35) und am Ausgangsstutzen (36) Sicherungsventile (S) vorgesehen sind, die einen Betrieb der Vorrichtung unter Druck erlauben.

21. Vorrichtung nach einem der Ansprüche 1 bis 12, **dadurch gekennzeichnet, daß** das Reaktionsgefäß 30 ein geschlossenes Reaktionsgefäß für einen Betrieb unter Druck oder unter Unterdruck ist, der aus Seitenwänden (30a), einer oberen Wand (30b) und einer unteren Wand (30b) besteht, die derart zusammengesetzt sind, daß sie den unteren, geschlossenen und gegenüber dem Außenbereich abgedichteten Raum begrenzen, wobei die obere Wand (30b) des Reaktionsgefäßes (30) mit einer Stützplatte (30d) verbunden ist, die in ein Gewinde (26) geschraubt ist, das im oberen Teil auf der Innenseite der Seitenwand (21) des Anwendungshohlraums (20) vorgesehen ist.

22. Vorrichtung nach einem der Ansprüche 1 bis 21, **dadurch gekennzeichnet, daß** das Reaktionsgefäß (30) eine Rückhaltekapazität des Produkts und/oder der Chemikalie von etwa ein Liter aufweist.
